# EUROPÄISCHE PATENTSCHRIFT

(11) **EP 3 096 148 B1**
(45) Veröffentlichungstag und Bekanntmachung des Hinweises auf die Patenterteilung: **03.01.2024**
(21) Anmeldenummer: 15168487.5
(22) Anmeldetag: 20.05.2015
(51) Int. Cl.: G01N 35/10

(54) **PIPETTIERVORRICHTUNG**
PIPETTING DEVICE
DISPOSITIF DE PIPETAGE

(43) Veröffentlichungstag der Anmeldung: 23.11.2016
(73) Patentinhaber: Siemens Healthcare Diagnostics Products GmbH, 35041 Marburg (DE)
(72) Erfinder: Wilmes, Hugo, 65812 Bad Soden (DE)

(56) Entgegenhaltungen:
- EP-A1- 0 569 851
- EP-A2- 0 994 356
- CN-A- 103 941 031
- DE-C1- 3 614 961
- US-A1- 2014 271 405

## Beschreibung

Gegenstand der Erfindung ist eine Pipettiervorrichtung für einen automatisch arbeitenden Analysator und liegt auf dem technischen Gebiet der automatischen in vitro-Diagnostiksysteme.

Zahlreiche Nachweis- und Analyseverfahren zur Bestimmung physiologischer Parameter in Körperflüssigkeitsproben oder anderen biologischen Proben werden heute automatisiert in großer Anzahl in automatischen Analysegeräten, auch so genannten in vitro-Diagnostiksystemen, durchgeführt.

Heutige Analysegeräte sind in der Lage, eine Vielzahl von Nachweisreaktionen und Analysen mit einer Probe durchzuführen. Um eine Vielzahl von Untersuchungen automatisiert durchführen zu können, sind diverse Vorrichtungen zum räumlichen Transfer von Messzellen, Reaktionsbehältern und Reagenzbehältern erforderlich, wie z.B. Transferarme mit Greiffunktion, Transportbänder oder drehbare Transporträder, sowie Vorrichtungen zum Transfer von Flüssigkeiten, wie z.B. Pipettiervorrichtungen. Die Geräte umfassen eine Steuereinheit, die mittels entsprechender Software dazu in der Lage ist, die Arbeitsschritte für die gewünschten Analysen weitgehend selbstständig zu planen und abzuarbeiten.

Viele der in derartigen automatisiert arbeitenden Analysegeräten verwendeten Analyseverfahren beruhen auf optischen Methoden. Diese Verfahren ermöglichen den qualitativen und quantitativen Nachweis von Analyten, d.h. der nachzuweisenden oder zu bestimmenden Substanzen in Proben. Die Bestimmung klinisch relevanter Parameter, wie zum Beispiel der Konzentration oder Aktivität eines Analyten, erfolgt vielfach, indem ein Teil einer Probe mit einem oder mehreren Testreagenzien in einem Reaktionsgefäß, welches auch die Messzelle sein kann, vermischt wird, wodurch z.B. eine biochemische Reaktion oder eine spezifische Bindungsreaktion in Gang gesetzt wird, die eine messbare Veränderung einer optischen oder anderen physikalischen Eigenschaft des Testansatzes bewirkt.

Es ist bekannt, dass in automatisch arbeitenden Analysatoren, die zur Untersuchung von biologischen Körperflüssigkeiten eingesetzt werden, die benötigten Reagenzien mittels einer Pipettiervorrichtung mit einer Pipettiernadel in eine Meßküvette eingefüllt werden. Die Pipettiervorrichtung hat dabei außerdem die Aufgabe, eine Durchmischung der zu untersuchenden Körperflüssigkeit mit den Reagenzien sicherzustellen. Hierzu ist es erforderlich, die Pipettiernadel in Schwingungen zu versetzen. Bisher war es nur an bestimmten, ortsfesten Positionen in einem automatischen Analysator möglich, die Pipettiernadel in Schwingung zu versetzen, an denen nicht verfahrbare Schwingungserzeuger vorgesehen sind, siehe z.B. EP0994356 A2. Dies führt dazu, dass nicht an allen mit der Pipettiernadel anfahrbaren Positionen eine Durchmischung der Probe erfolgen kann. Ferner ist ein Durchmischen der Probe während eines Transfers der Pipettiernadel von einer ersten Position im Analysegerät zu einer zweiten Position im Analysegerät grundsätzlich nicht möglich. Dies führt zu einem höheren Zeitaufwand und reduziert die Flexibilität in der Abarbeitung einer Analyse in einem automatischen Analysegerät erheblich.

EP 0 569 851 A1 offenbart eine Pipettiervorrichtung, bei der ein Pipettierröhrchen in einer Aufnahmeeinrichtung angeordnet ist, wobei die Aufnahmeeinrichtung in einer Halterung drehbar gelagert und über eine Kupplung mit einem Exzenterantrieb verbunden ist. DE 36 14 961 C1 offenbart eine mit einem Pipettenrohr zusammenarbeitende Einrichtung, die aus einem Schwingungsgeber und einem Schwingungsaufnehmer besteht, und eine Steuerungseinheit, die einen Komparator, der die Soll- mit der Ist-Frequenz des Pipettenrohr-Endes vergleicht, besitzt.

Es ist daher Aufgabe der Erfindung, eine Pipettiervorrichtung zur Verfügung zu stellen, welche eine Reduktion des Zeitaufwands und eine höhere Flexibilität in der Abarbeitung einer Analyse in einem automatischen Analysegerät bietet.

**Diese Aufgabe wird erfindungsgemäß durch die im Folgenden beschriebenen Gegenstände gelöst.**

Es wurde gefunden, dass eine verbesserte Pipettiervorrichtung erreicht werden kann, wenn der Schwingungserzeuger an der beweglichen Vorrichtung zum Bewegen der Pipettiernadel angebracht wird.

Dies hat den Vorteil, dass an jeder Position die Pipettiernadel in Schwingung versetzt werden kann und so die Durchmischung einer Probe unabhängig von festen Positionen der Pipettiernadel erfolgen kann. Ferner ist ein Durchmischen auch während eines Transfers der Pipettiernadel von einer ersten Position im Analysegerät zu einer zweiten Position im Analysegerät möglich. Dies ermöglicht beispielsweise eine Reduktion des Zeitaufwands und eine höhere Flexibilität in der Abarbeitung einer Analyse in einem automatischen Analysegerät.

Gegenstand der vorliegenden Erfindung ist eine Pipettiervorrichtung für ein automatisches Analysegerät gemäß Anspruch 1, wobei die Pipettiervorrichtung eine Pipettiernadel mit einer Längsachse zum Pipettieren von Flüssigkeiten, eine in der Richtung der Längsachse der Pipettiernadel und in mindestens einer Richtung senkrecht zur Richtung der Längsachse der Pipettiernadel beweglichen Vorrichtung zum Bewegen der Pipettiernadel umfasst. Weiter umfasst die Pipettiervorrichtung eine Halterung für die Pipettiernadel, die an der beweglichen Vorrichtung angebracht ist und mit der die Pipettiernadel lösbar verbunden ist, und einen Schwingungserzeuger, der wenigstens die Spitze der Pipettiernadel in Schwingung versetzen kann. Der Schwingungserzeuger ist an der beweglichen Vorrichtung oder an der Halterung für die Pipettiernadel angebracht.

Bevorzugt ist die bewegliche Vorrichtung als automatisch bewegbarer Robotorarm ausgestaltet, der z.B. Teil einer automatischen Robotorstation ist.

Die Pipettiervorrichtung gemäß Anspruch 1 umfasst ein verschiebbares erstes Verbindungselement mit einem ersten Rückstellelement, wobei das erste Verbindungselement eine lösbare Verbindung zwischen der Pipettiernadel und dem Schwingungserzeuger herstellt.

Das erste Verbindungselement ist dabei in Richtung der Längsachse der Pipettiernadel relativ zur Pipettiernadel verschiebbar. Dies hat den Vorteil, dass auf besonders einfache und kostengünstige Art die lösbare Verbindung zwischen der Pipettiernadel und dem Schwingungserzeuger herstellbar und trennbar ist. Im Betriebszustand der Pipettiervorrichung ist die Pipettiernadel in die Halterung eingesetzt und der Schwingungserzeuger ist mit der Pipettiernadel über das erste Verbindungselement verbunden, so dass der Schwingungserzeuger die Spitze der Pipettiernadel in Schwingung versetzen kann. Das erste Rückstellelement übt eine rückstellende Kraft auf das erste Verbindungselement aus, die das erste Verbindungselement in einer Position hält, in der das erste Verbindungselement eine Verbindung zwischen der Pipettiernadel und dem Schwingungserzeuger bei in die Halterung eingesetzter Pipettiernadel herstellt.

Bevorzugt weist das erste Verbindungselement die Form eines Winkels auf. Bevorzugt umfasst der Winkel zwei Schenkel, die rechtwinkelig zueinander angeordnet sind. Bevorzugt ist der Winkel aus Metall oder Kunststoff gefertigt. Dies hat den Vorteil, dass auf besonders einfache und kostengünstige Art die lösbare Verbindung zwischen der Pipettiernadel und dem Schwingungserzeuger herstellbar und trennbar ist. Vorteilhafterweise weist dabei das erste Verbindungselement eine Aussparung auf, in die ein Exzenter, der Teil des Schwingungserzeugers ist, eingreifen kann.

In vorteilhafter Ausgestaltung umfasst die Pipettiervorrichtung ein erstes und ein zweites Befestigungselement, wobei die Pipettiernadel eine Aufhängung umfasst, und wobei das erste Befestigungselement seitlich an der Aufhängung angebracht und als Schneide ausgebildet ist, und wobei das zweite Befestigungselement an der Halterung angebracht und als Prismenlager ausgebildet ist. Dies hat den Vorteil, dass die erfindungsgemäße Nadel besonders leicht und unkompliziert ausgetauscht werden kann. Weiter hat dies den Vorteil, dass die Pipettiernadel in eine genau definierte Position, insbesondere auch wiederholbar, einsetzbar ist.

In bevorzugter Ausführung ist eine Klemmschraube vorgesehen, die das erste Verbindungselement in einer Position fixieren kann. Bevorzugt fixiert die Klemmschraube im Betriebszustand der Pipettiervorrichung das erste Verbindungselement in einer Position, in der das erste Verbindungselement eine Verbindung zwischen der Pipettiernadel und dem Schwingungserzeuger bei in die Halterung eingesetzter Pipettiernadel herstellt. Bevorzugt ist die Klemmschraube an der Aufhängung der Pipettiernadel befestigt.

Beim Einfüllen der Reagenzien und bei den sich anschließenden Aktionen besteht die Gefahr, dass die empfindliche Pipettiernadel mit der Messküvette oder anderen Geräteteilen kollidiert, dabei beschädigt wird und wegen Unbrauchbarkeit ausgewechselt werden muss. Bei herkömmlichen Systemen ist häufig das Auswechseln der Pipettiernadel mit erheblichem technischen Aufwand verbunden, der nur von einem dafür ausgebildeten Servicetechniker geleistet werden kann. Dabei müssen z.B. nicht nur die Pipettiernadel selbst und andere mechanische Teile, sondern auch der Motor und das Exzenterlager ausgewechselt werden. Dies verursacht einen vergleichsweise hohen Zeit- und/oder Kostenaufwand. Es ist daher auch von besonderer wirtschaftlicher Bedeutung, dass die erfindungsgemäße Nadel besonders leicht und unkompliziert ausgetauscht werden kann, da dies es dem am Analysator arbeitenden Bedienungspersonal ermöglicht, ohne Hinzuziehung eines speziell ausgebildeten Technikers eine beschädigte Pipettiernadel auf schnelle und einfache Weise auszuwechseln. In weiterer vorteilhafter Ausgestaltung umfasst die Pipettiervorrichtung ein zweites Rückstellelement, wobei das zweite Rückstellelement die Schneide und das Prismenlager in einer festen Position fixieren und lösbar verbinden kann. Dies hat den Vorteil, dass die Pipettiernadel in einer genau definierten Position wiederholbar fixiert werden kann und eine lösbare Verbindung zwischen der Schneide und dem Prismenlager leicht herstellbar und lösbar ist.

Bevorzugt handelt es sich beim zweiten Rückstellelement um ein Federelement, besonders bevorzugt um eine Blattfeder. Dies hat den Vorteil, dass das Rückstellelement besonders einfach und preisgünstig realisierbar ist.

In vorteilhafter Ausgestaltung umfasst der Schwingungserzeuger eine exzentrisch rotierende Welle, die in eine Aussparung des ersten Verbindungselements eingreifen kann. Dies hat den Vorteil, dass die Verbindung zwischen dem Schwingungserzeuger und der Pipettiernadel besonders einfach herstellbar und lösbar ist. Weiter hat dies den Vorteil, dass die Schwingungsübertragung vom Schwingungserzeuger auf die Pipettiernadel mittels des ersten Verbindungselements besonders einfach möglich ist.

Bei der exzentrisch rotierenden Welle kann es sich z.B. um eine Exzenterwelle handeln.

Vorteilhafterweise umfasst das Exzenterlager mindestens ein Kugellager. Vorzugsweise wird der Kontakt zwischen der exzentrisch rotierenden Welle und dem Rand der Aussparung des ersten Verbindungselements, in die die exzentrisch rotierende Welle wenigstens teilweise eingreift, mittels des Kugellagers hergestellt. Dieses Kugellager wird auch als Exzenterkugellager bezeichnet. Dies hat den Vorteil, dass eine Abnutzung des Exzenterkugellagers oder des Rands der Aussparung des ersten Verbindungselements minimiert wird. Weiter werden auftretende Reibungskräfte minimiert.

Vorzugsweise ist ein erster Sensor vorgesehen, der die Stellung der exzentrisch rotierenden Welle erfasst. Dies hat den Vorteil, dass sichergestellt werden kann, dass die Pipettiernadel nach einem Schüttelvorgang sich in der senkrechten Position, oder innerhalb einer bestimmten Abweichung von der senkrechten Position befindet. Somit ist eine genaue Positionierung der Pipettiernadel möglich. Weiter wird so vermieden, dass die exzentrisch rotierende Welle des Schwingungserzeugers zufällig in einer Position stehen bleibt, in der die Pipettiernadel nicht hinreichend senkrecht steht und eine genaue Positionierung der Pipettiernadel nicht möglich wäre.

Bevorzugt handelt es sich bei dem ersten Sensor um einen Hallsensor. Dies hat den Vorteil, dass die Stellung der exzentrisch rotierenden Welle besonders einfach und zuverlässig erfasst werden kann. In vorteilhafter Ausgestaltung ist ein Magnet oder sind mehrere Magnete mit der exzentrisch rotierenden Welle verbunden, deren Magnetfeld von dem Hallsensor erfasst werden kann.

In weiterer bevorzugter Ausgestaltung umfasst der Schwingungserzeuger mindestens einen Motor. Dies hat den Vorteil, dass die Schwingungserzeugung auf besonders einfache und kostengünstige Art automatisiert erfolgen kann. Bevorzugt handelt es sich bei dem Motor um einen Elektromotor. Dies hat den Vorteil, dass die Schwingungserzeugung besonders leicht elektronisch erzeugbar, regelbar und überwachbar ist.

In weiterer bevorzugter Ausgestaltung umfasst der Schwingungserzeuger einen Exzentermechanismus, bei dem ein Motor, bevorzugt ein Elektromotor, ein Exzenterlager und ein Exzenterkugellager mit einer exzentrisch rotierenden Welle antreibt.

In weiterer vorteilhafter Ausgestaltung umfasst das erste Rückstellelement mindestens ein Federelement, bevorzugt eine Spiralfeder. Dies hat den Vorteil, dass das erste Rückstellelement besonders einfach und kostengünstig ausgestaltet werden kann.

In besonders bevorzugter Ausführungsform ist die Pipettiernadel mit dem ersten Verbindungselement in Richtung der Längsachse der Pipettiernadel verschiebbar. Dies hat den Vorteil, dass sich die Pipettiernadel bei fehlerhaftem Aufsetzen, z.B. in einem Gefäß oder auf einer Baugruppe des Analysators, entsprechend verschieben kann und eine Beschädigung der Pipettiernadel und/oder des Gegenstandes, auf den die Pipettiernadel fehlerhaft aufgesetzt ist, vermieden oder wenigstens begrenzt werden kann.

Vorzugsweise ist ein zweiter Sensor, bevorzugt ein Mikroschalter oder ein Hallsensor, vorgesehen, der eine Verschiebung der Pipettiernadel in Richtung der Längsachse der Pipettiernadel relativ zur Halterung detektiert. Dies hat den Vorteil, dass bei einem fehlerhaften Aufsetzen der Pipettiernadel der zweite Sensor ein Signal auslösen kann und z.B. der Motor, der die Pipettiernadel in Richtung der Längsachse der Pipettiernadel bewegt, abgeschaltet werden kann. So kann eine Beschädigung der Pipettiernadel und/oder des Gegenstandes, auf den die Pipettiernadel aufsetzt, vermieden oder wenigstens begrenzt werden.

In weiterer vorteilhafter Ausgestaltung weist das erste Befestigungselement mindestens einen Griff, bevorzugt mindestens zwei Griffe, zum Auswechseln der Pipettiernadel auf. Dies hat den Vorteil, dass die Pipettiernadel besonders einfach und komfortabel per Hand ausgetauscht werden kann.

Vorzugsweise ist die Pipettiernadel heizbar und/oder kühlbar ausgestaltet. Dies hat den Vorteil, dass z.B. Proben- oder Reagenzflüssigkeit in der Pipettiernadel temperiert werden kann und z.B. auf eine bestimmte Temperatur erhitzt oder gekühlt werden kann.

In einer vorteilhaften Ausführungsform umfassen z.B. die Halterung, das erste Verbindungselement, das erste Befestigungselement, das zweite Verbindungselement, die Pipettiernadel, die Aufhängung des Schwingungserzeugers und/oder der Griff oder die Griffe Kunststoffspritzgussteile. Dies hat den Vorteil, dass Montage und Teilekosten reduziert werden können.

Ein anderer Gegenstand der Erfindung ist ein Analysegerät, welches eine vorgenannte erfindungsgemäße Pipettiervorrichtung umfasst.

Ein weiterer Gegenstand der Erfindung ist die Verwendung einer erfindungsgemäßen Pipettiervorrichtung in einem automatischen Analysegerät.

Unter einer "Probe" ist im Sinne der Erfindung das Material zu verstehen, dass die nachzuweisende Substanz (den Analyten) vermutlich enthält. Der Begriff "Probe" umfasst insbesondere biologische Flüssigkeiten von Menschen oder Tieren wie z.B. Blut, Plasma, Serum, Sputum, Exsudat, bronchoalveoläre Lavage, Lymphflüssigkeit, Synovialflüssigkeit, Samenflüssigkeit, Vaginalschleim, Feces, Urin, Liquor, aber auch z.B. durch Homogenisation oder Zelllyse für die photometrische, bevorzugt nephelometrische Bestimmung entsprechend aufgearbeitete Gewebe- oder Zellkulturproben. Ferner können auch z.B. pflanzliche Flüssigkeiten oder Gewebe, forensische Proben, Wasser- und Abwasserproben, Nahrungsmittel, Arzneimittel als Probe dienen, die ggf. vor der Bestimmung einer entsprechenden Probenvorbehandlung zu unterziehen sind.

Bei einem quantitativen Nachweis wird die Menge, die Konzentration oder die Aktivität des Analyten in der Probe gemessen. Von dem Begriff des "quantitativen Nachweises" sind auch semiquantitative Methoden umfasst, die nur die ungefähre Menge, Konzentration oder Aktivität des Analyten in der Probe erfassen oder nur zu einer relativen Mengen-, Konzentrations- oder Aktivitätsangabe dienen können. Unter einem qualitativen Nachweis ist der Nachweis des Vorhandenseins des Analyten in der Probe überhaupt oder das Anzeigen, dass die Menge, Konzentration oder Aktivität des Analyten in der Probe unterhalb oder oberhalb eines bestimmten oder mehrerer bestimmter Schwellenwerte liegt, zu verstehen.

**Die Erfindung wird anhand von Zeichnungen exemplarisch näher erläutert. Darin zeigen:**
FIG 1 schematisch den Aufbau der Pipettiervorrichtung (1) mit in die Halterung (5) eingesetzter Pipettiernadel (2),
FIG 2 schematisch den Aufbau der Pipettiernadel (2) und das erste Verbindungselement (8),
FIG 3 schematisch den Aufbau der Halterung (5) mit Schwingungserzeuger ohne eingesetzter Pipettiernadel (2),
FIG 4, 7 und 8 schematisch eine Detailansicht der Pipettiervorrichtung (1) mit in die Halterung (5) eingesetzter Pipettiernadel (2),
FIG 5 und 6 schematisch eine Detailansicht der Pipettiervorrichtung (1) beim Einsetzen oder Herausnehmen der Pipettiernadel durch Herstellung oder Lösung der Verbindung zwischen der Halterung (5) und der Pipettiernadel (2).

**Gleiche Teile sind in allen Figuren mit denselben Bezugszeichen versehen.**

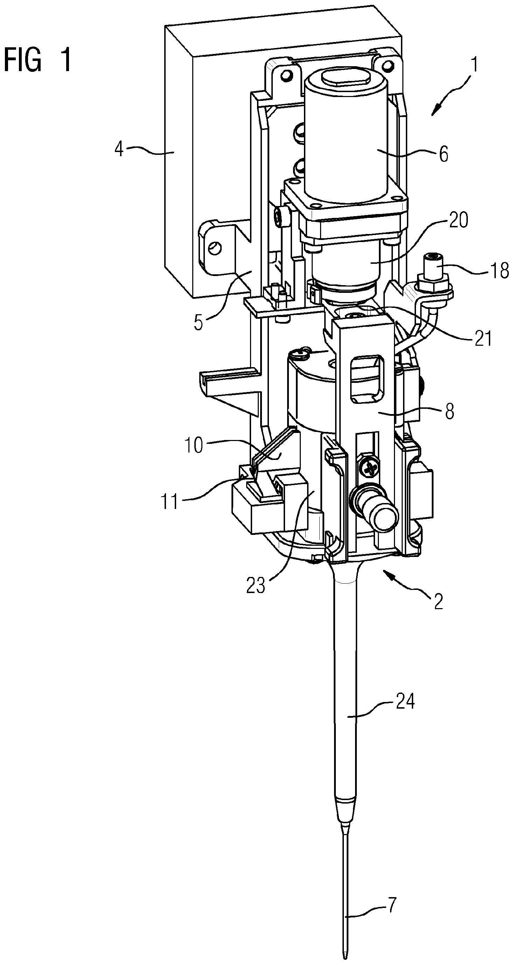

Die Pipettiervorrichtung (1) gemäß FIG 1 ist eingebettet in ein nicht näher dargestelltes Analysegerät, welches zur Ausführung einer Vielzahl von Analysen von Proben ausgestaltet ist. Dazu umfasst das automatische Analysegerät eine Vielzahl von nicht gezeigten Pipettiereinrichtungen und Transporteinrichtungen sowie weiterhin eine Steuereinheit zum automatisierten Auswerten der Analysen.

Die Pipettiervorrichtung (1) umfasst die bewegliche Vorrichtung (4), die als automatisch bewegbarer Robotorarm ausgestaltet ist, die Halterung (5) mit dem Schwingungserzeuger umfassend das Exzenterlager (20), den Motor (6), sowie die Pipettiernadel (2). Die Pipettiernadel (2) umfasst einen Pipettenzulauf (18), eine Aufhängung (23) und einen Nadelkörper (24) mit einer Spitze (7). Mittels des ersten Befestigungselements (10) ist die Pipettiernadel (2) lösbar mit der Halterung (5) verbunden. Die Halterung (5) ist an der beweglichen Vorrichtung (4) befestigt. Das erste Befestigungselement (10) ist als Schneide ausgebildet und ruht auf einem zweiten Befestigungselement (11), das als Prismenlager ausgebildet ist. Das erste Verbindungselement (8) umfasst eine Aussparung (21).

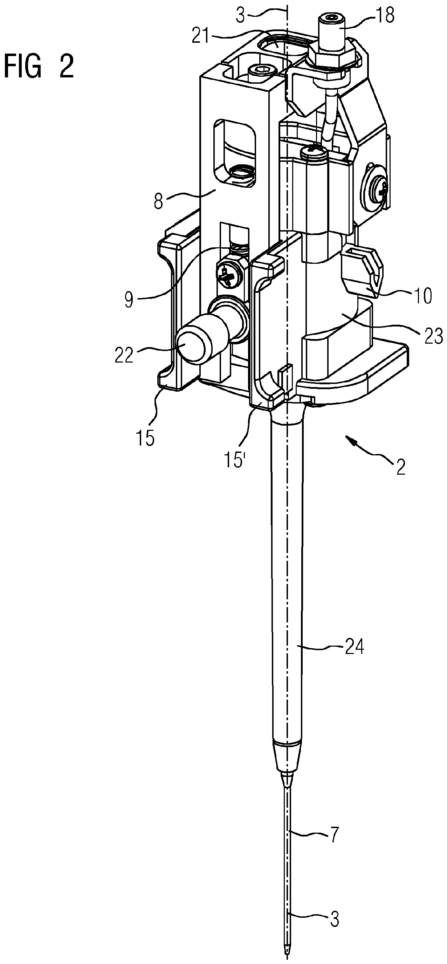

FIG 2 zeigt die Pipettiernadel (2) mit der Spitze (7), dem Nadelkörper (24), der Aufhängung (23) und dem Pipettenzulauf (18) sowie das erste Befestigungselement (10), das als Schneide ausgebildet ist, und das erste Verbindungselement (8). Das erste Verbindungselement (8) umfasst die Aussparung (21) und das erste Rückstellelement (9). Das erste Befestigungselement (10) ist seitlich an der Aufhängung (23) in deren oberem Teil angebracht. Die Richtung der Längsachse (3) der Pipettiernadel (2) ist eingezeichnet als gestrichelte Linie. Weiter ist eine Klemmschraube (22) dargestellt.

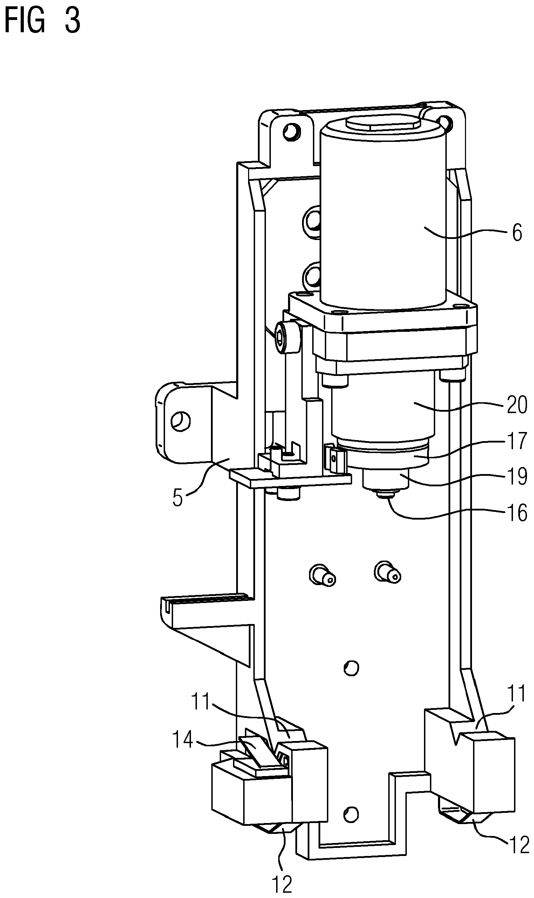

FIG 3 zeigt die Halterung (5), die an der beweglichen Vorrichtung (4, nicht gezeigt) angebracht ist. Der Schwingungserzeuger umfasst einen Motor (6), der das Exzenterlager (20) und das Exzenterkugellager (19) mit der exzentrisch rotierenden Welle (16) antreibt, wobei der Motor (6) an der Halterung (5) befestigt ist. Die Halterung (5) umfasst zwei Prismenlager (11) mit je einem als Federelement ausgestalteten zweiten Rückstellelement (12) (nur teilweise sichtbar) und den ersten Sensor (14), der als Mikroschalter ausgestaltet ist. Weiter ist ein Magnet (17) in Richtung des Exzenterkugellagers (19) im unteren Bereich des Exzenterlagers (20) seitlich angebracht.

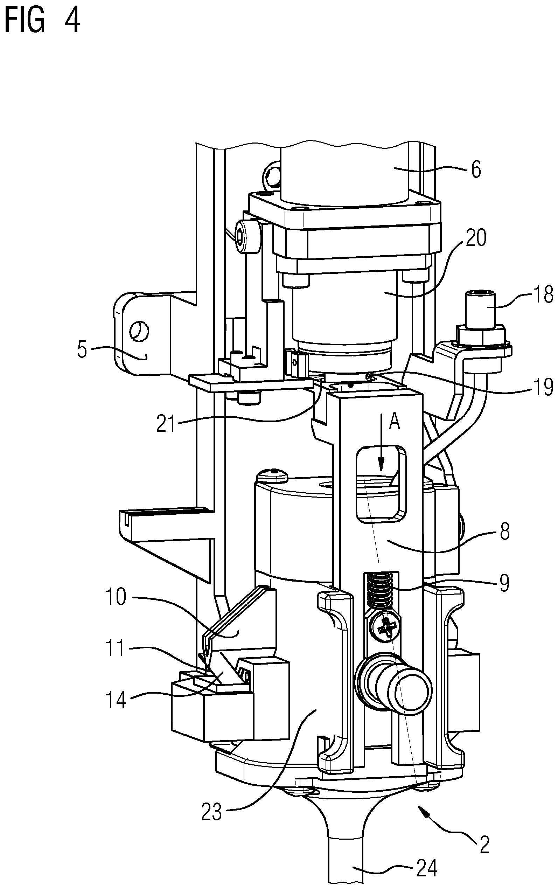

FIG 4 zeigt eine Detailansicht der Pipettiervorrichtung (1) mit in die Halterung (5) eingesetzter Pipettiernadel (2) mit dem Pipettenzulauf (18), der Aufhängung (23) und einem Teil des Nadelkörpers (24). Das erste Befestigungselement (10) ist als Schneide ausgebildet und das zweite Befestigungselement (11) ist als Prismenlager ausgebildet. Das erste Verbindungselement (8), das als Winkel ausgebildet ist, umfasst die Aussparung (21) und befindet sich in der Ruhestellung und ist nicht gegen das erste Rückstellelement (9) nach unten aus der Ruhestellung ausgelenkt in Richtung A des Pfeils. Die lösbare Verbindung zwischen dem Exzenterkugellager (19) mit der exzentrisch rotierenden Welle (16, nicht gezeigt) der Schütteleinrichtung und des ersten Verbindungselements (8) ist hergestellt, und es besteht direkter Kontakt zwischen dem Exzenterkugellager (19) und dem Rand der Aussparung (21) im ersten Verbindungselement (8). Weiter ist das Exzenterlager (20) dargestellt. Im Bereich der Prismenlager (11) ist ein zweiter Sensor (14), der als Mikroschalter ausgestaltet ist, an der Halterung (5) angebracht. Der Mikroschalter löst aus, wenn die Pipettiernadel (2) fehlerhaft aufsetzt und die Schneiden (10), die seitlich an der Aufhängung (23) befestigt sind, entlang der Längsachse (3) aus dem Prismenlager (11) herausgedrückt werden.

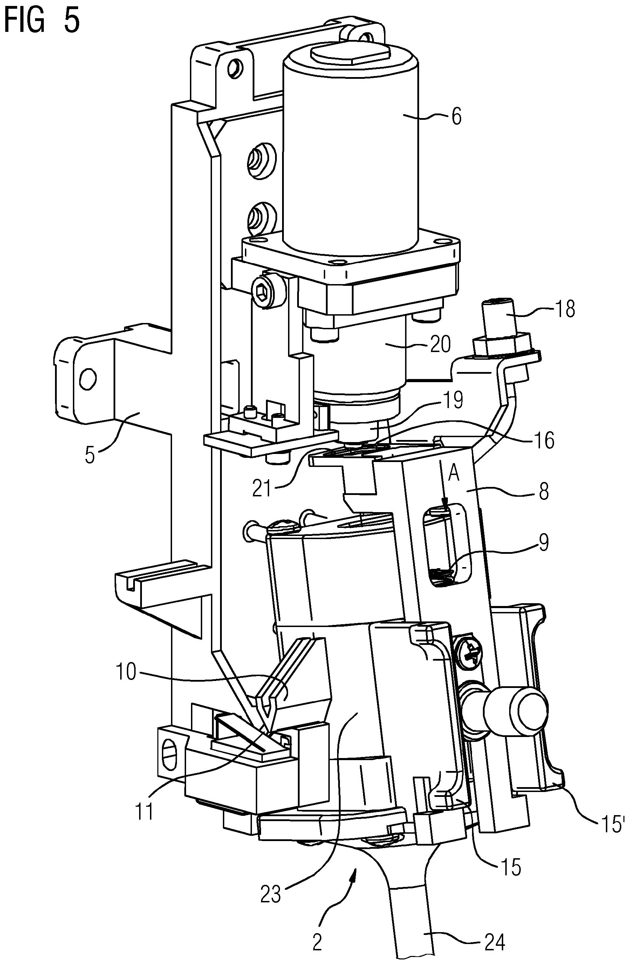

FIG 5 zeigt eine Detailansicht der Pipettiernadel (2) mit Pipettenzulauf (18), Aufhängung (23), einem Teil des Nadelkörpers (24) sowie die Halterung (5) beim Einsetzen der Pipettiernadel (2) in die Halterung (5). Die Pipettiernadel (2) ist schräggestellt und die Schneide des ersten Befestigungselements (10) befindet sich in räumlicher Nähe zum Prismenlager des zweiten Befestigungselements (11), jedoch befindet sich die Schneide noch nicht im Prismenlager. Die Griffe (15, 15') erleichtern dabei das manuelle Einsetzen (bzw. auch das Herausnehmen) der Pipettiernadel (2) aus der Halterung (5). Das erste Verbindungselement (8), das als Winkel ausgebildet ist, ist gegen das erste Rückstellelement (9) nach unten aus der Ruhestellung ausgelenkt in Richtung A des Pfeils. Die lösbare Verbindung zwischen dem Exzenterkugellager (19) mit der exzentrisch rotierenden Welle (16) der Schütteleinrichtung und des ersten Verbindungselements (8) ist gelöst, und es besteht kein direkter Kontakt zwischen der Welle (16) und dem ersten Verbindungselement (8). Weiter ist das Exzenterlager (20) gezeigt. Das Exzenterkugellager (19) und der Rand der Aussparung (21) im ersten Verbindungselements (8) können miteinander in lösbaren Kontakt gebracht werden.

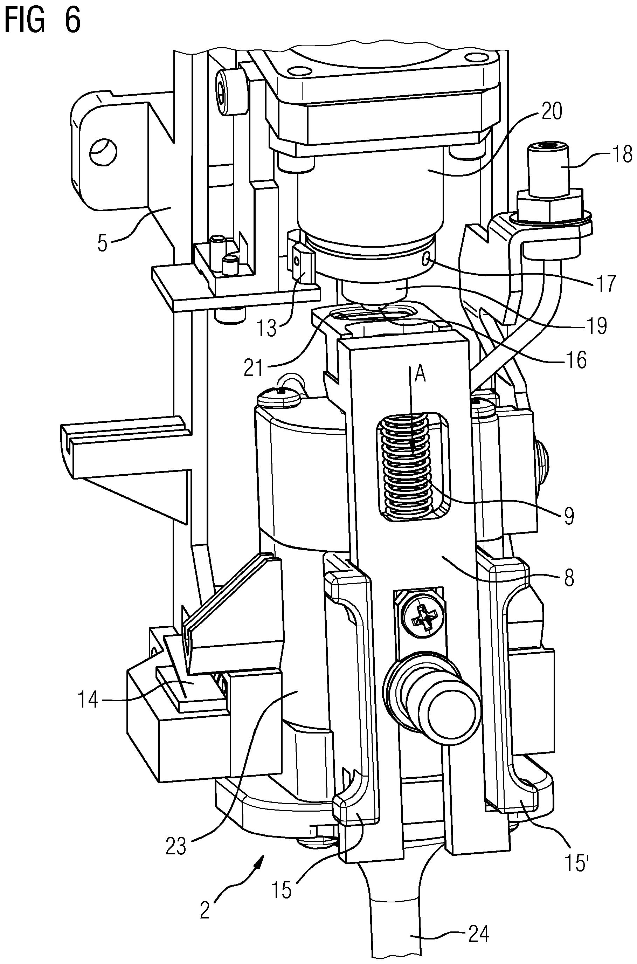

FIG 6 zeigt bis auf den Motor (6) der Schütteleinrichtung, der nicht dargestellt ist, die in FIG 5 dargestellten Gegenstände aus einem anderen Blickwinkel. Weiter zeigt FIG 6 den ersten Sensor (13), der an der Halterung (5) in räumlicher Nähe zum Exzenterantrieb (20) und Exzenterkugellager (19) angebracht ist. Der Magnet (17) ist in Richtung des Exzenterkugellagers (19) im unteren Bereich des Exzenterlagers (20) seitlich angebracht, so dass der Magnet (17) in Abhängigkeit von der Stellung der exzentrisch rotierenden Welle (16) mit dem Sensor (13) in Wechselwirkung tritt und so die Stellung der exzentrisch rotierenden Welle (16) bzw. die Stellung des Exzenterkugellagers (19) ermittelt werden kann.

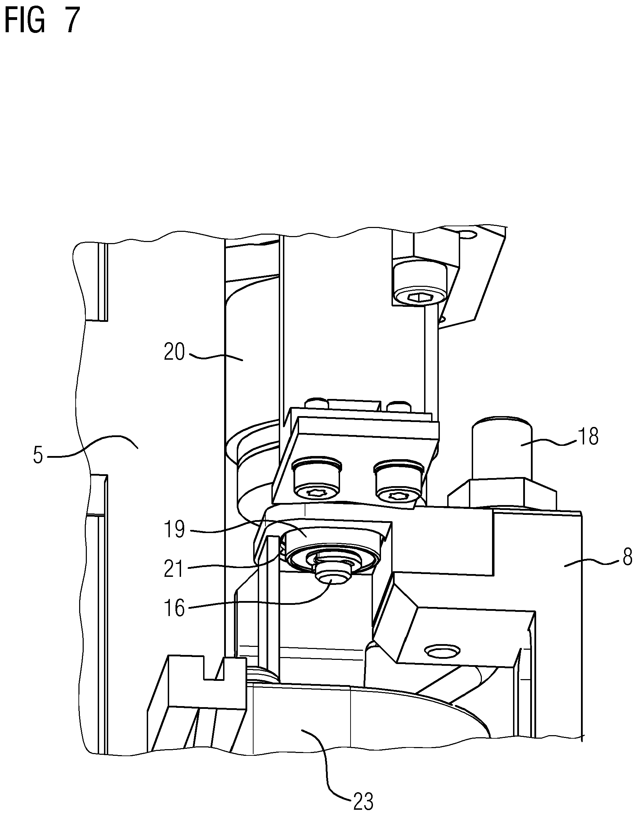

FIG 7 zeigt eine Detailansicht der Pipettiervorrichtung (1) von schräg unten mit in die Halterung (5) eingesetzter Pipettiernadel (2), wobei von der Pipettiernadel (2) der Pipettenzulauf (18) und die Aufhängung (23) teilweise sichtbar sind. Das erste Verbindungselement (8), das als Winkel ausgebildet ist, umfasst die Aussparung (21) und befindet sich in der Ruhestellung. Die lösbare Verbindung zwischen dem Exzenterkugellager (19) mit der exzentrisch rotierenden Welle (16) des Schwingungserzeugers und des ersten Verbindungselements (8) ist hergestellt, und es besteht direkter Kontakt zwischen dem Exzenterkugellager (19) und dem Rand der Aussparung (21) im ersten Verbindungselements (8). Weiter ist das Exzenterlager (20) dargestellt.

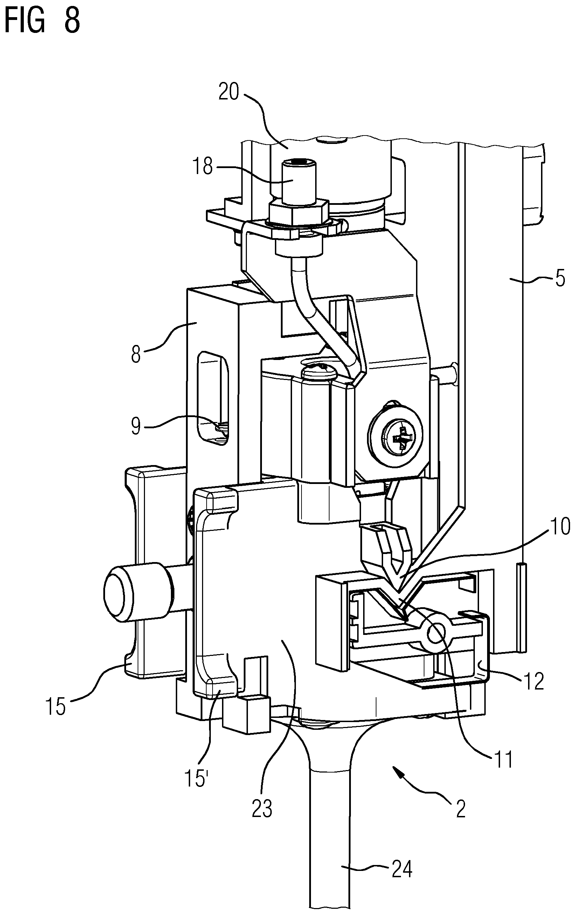

FIG 8 zeigt eine Detailansicht der Pipettiernadel (2) und der Halterung (5) bei in die Halterung (5) eingesetzter Pipettiernadel (2) mit zwei Griffen (15, 15') und dem ersten Verbindungselement (8). Die Schneide des ersten Befestigungselements (10) befindet sich im Prismenlager des zweiten Befestigungselements (11). Das zweite Rückstellelement (12), das als Federelement ausgestaltet ist, übt eine rückstellende Kraft aus und hält die Schneide im Prismenlager.

### Bezugszeichenliste

- 1: Pipettiervorrichtung
- 2: Pipettiernadel
- 3: Längsachse
- 4: Bewegliche Vorrichtung
- 5: Halterung
- 6: Motor
- 7: Spitze
- 8: Erstes Verbindungselement
- 9: Erstes Rückstellelement
- 10: Erstes Befestigungselement
- 11: Zweites Befestigungselement
- 12: Zweites Rückstellelement
- 13: Erster Sensor
- 14: Zweiter Sensor
- 15, 15`: Griff
- 16: Welle
- 17: Magnet
- 18: Pipettenzulauf
- 19: Exzenterkugellager
- 20: Exzenterlager
- 21: Aussparung
- 22: Klemmschraube
- 23: Aufhängung
- 24: Nadelkörper
- A: Richtung

## Patentansprüche

1. Pipettiervorrichtung (1) für ein automatisches Analysegerät, die Pipettiervorrichtung (1) umfassend
a. eine Pipettiernadel (2) mit einer Längsachse (3) zum Pipettieren von Flüssigkeiten,
b. eine in der Richtung der Längsachse (3) der Pipettiernadel (2) und in mindestens einer Richtung senkrecht zur Richtung der Längsachse (3) der Pipettiernadel (2) beweglichen Vorrichtung (4) zum Bewegen der Pipettiernadel (2) innerhalb mindestens eines Bewegungsbereichs,
c. eine Halterung (5) für die Pipettiernadel (2), die an der beweglichen Vorrichtung (4) angebracht ist und mit der die Pipettiernadel (2) lösbar verbunden ist, und
d. einen Schwingungserzeuger, der wenigstens die Spitze (7) der Pipettiernadel (2) in Schwingung versetzen kann,
**dadurch gekennzeichnet, dass**
der Schwingungserzeuger an der beweglichen Vorrichtung (4) oder an der Halterung (5) angebracht ist, wobei die Pipettiervorrichtung (1) ein verschiebbares erstes Verbindungselement (8) mit einem ersten Rückstellelement (9) umfasst und wobei das erste Verbindungselement (8) eine lösbare Verbindung zwischen der Pipettiernadel (2) und dem Schwingungserzeuger herstellt, wobei das erste Verbindungselement in Richtung der Längsachse der Pipettiernadel relativ zur Pipettiernadel verschiebbar ist.

2. Pipettiervorrichtung (1) nach Anspruch 1, wobei das erste Verbindungselement (8) die Form eines Winkels aufweist.

3. Pipettiervorrichtung (1) nach einem der vorhergehenden Ansprüche, wobei die Pipettiervorrichtung (1) ein erstes und ein zweites Befestigungselement (10, 11) umfasst und wobei die Pipettiernadel (2) eine Aufhängung (23) umfasst und wobei das erste Befestigungselement (10) seitlich an der Aufhängung (23) angebracht und als Schneide ausgebildet ist, und wobei das zweite Befestigungselement (11) an der Halterung (5) angebracht und als Prismenlager ausgebildet ist.

4. Pipettiervorrichtung (1) nach Anspruch 3, wobei die Pipettiervorrichtung (1) ein zweites Rückstellelement (12), bevorzugt ein Federelement, besonders bevorzugt eine Blattfeder, umfasst und wobei das zweite Rückstellelement (12) die Schneide und das Prismenlager in einer festen Position fixiert und lösbar verbindet.

5. Pipettiervorrichtung (1) nach einem der Ansprüche 1 oder 2, wobei der Schwingungserzeuger eine exzentrisch rotierende Welle (16) umfasst, die in das erste Verbindungselement (8) eingreifen kann.

6. Pipettiervorrichtung (1) nach Anspruch 5, wobei ein erster Sensor (13), bevorzugt ein Hallsensor, vorgesehen ist, der die Stellung der exzentrisch rotierenden Welle (16) erfasst.

7. Pipettiervorrichtung (1) nach einem der vorhergehenden Ansprüche, wobei der Schwingungserzeuger mindestens einen Motor (6), bevorzugt einen Elektromotor, umfasst.

8. Pipettiervorrichtung (1) nach einem der Ansprüche 1 bis 7, wobei das erste Rückstellelement (9) mindestens ein Federelement, bevorzugt eine Spiralfeder, umfasst.

9. Pipettiervorrichtung (1) nach einem der Ansprüche 1, 2, 5 oder 6, wobei die Pipettiernadel (2) mit dem ersten Verbindungselement (8) in Richtung der Längsachse (3) der Pipettiernadel (2) verschiebbar ist.

10. Pipettiervorrichtung (1) nach einem der vorhergehenden Ansprüche, wobei ein zweiter Sensor (14), bevorzugt ein Mikroschalter und/oder Hallsensor, vorgesehen ist, der eine Verschiebung der Pipettiernadel (2) in Richtung der Längsachse (3) der Pipettiernadel detektiert.

11. Pipettiervorrichtung (1) nach einem der Ansprüche 3 bis 10, wobei das erste Befestigungselement (10) mindestens einen Griff (15, 15'), bevorzugt mindestens zwei Griffe (15, 15'), zum Auswechseln der Pipettiernadel (2) aufweist.

12. Pipettiervorrichtung (1) nach einem der vorhergehenden Ansprüche, wobei die Pipettiernadel (2) heizbar ist.

13. Automatisches Analysegerät umfassend eine Pipettiervorrichtung (1) nach einem der vorhergehenden Ansprüche.

14. Verwendung einer Pipettiervorrichtung (1) nach einem der Ansprüche 1 bis 12 in einem automatischen Analysegerät.

## Claims

1. Pipetting device (1) for an automatic analysis appliance, the pipetting device (1) comprising
a. a pipetting needle (2) with a longitudinal axis (3), for the pipetting of liquids,
b. a device (4) which is movable in the direction of the longitudinal axis (3) of the pipetting needle (2) and in at least one direction perpendicular to the direction of the longitudinal axis (3) of the pipetting needle and which is used for moving the pipetting needle (2) within at least one range of movement,
c. a holder (5) for the pipetting needle (2), the holder (5) being mounted on the movable device (4) and the pipetting needle (2) being releasably connected to the holder (5), and
d. a vibration generator which can set at least the tip (7) of the pipetting needle (2) in vibration,
**characterized in that**
the vibration generator is mounted on the movable device (4) or on the holder (5), wherein the pipetting device (1) comprises a movable first connection element (8) with a first resetting element (9), and wherein the first connection element (8) produces a releasable connection between the pipetting needle (2) and the vibration generator, wherein the first connection element is movable relative to the pipetting needle in the direction of the longitudinal axis of the pipetting needle.

2. Pipetting device (1) according to Claim 1, wherein the first connection element (8) has a shape of an angle piece.

3. Pipetting device (1) according to one of the preceding claims, wherein the pipetting device (1) comprises a first and a second securing element (10, 11), and wherein the pipetting needle (2) comprises a suspension (23), and wherein the first securing element (10) is mounted laterally on the suspension (23) and is designed as a blade, and wherein the second securing element (11) is mounted on the holder (5) and is designed as a prism bearing.

4. Pipetting device (1) according to Claim 3, wherein the pipetting device (1) comprises a second resetting element (12), preferably a spring element, particularly preferably a leaf spring, and wherein the second resetting element (12) fixes the blade and the prism bearing in a stable position and releasably connects them.

5. Pipetting device (1) according to either of Claims 1 or 2, wherein the vibration generator comprises an eccentrically rotating shaft (16), which can engage in the first connection element (8).

6. Pipetting device (1) according to Claim 5, wherein a first sensor (13), preferably a Hall sensor, is provided which detects the position of the eccentrically rotating shaft (16).

7. Pipetting device (1) according to one of the preceding claims, wherein the vibration generator comprises at least one motor (6), preferably an electric motor.

8. Pipetting device (1) according to one of Claims 1 to 7, wherein the first resetting element (9) comprises at least one spring element, preferably a helical spring.

9. Pipetting device (1) according to one of Claims 1, 2, 5 and 6, wherein the pipetting needle (2) is movable with the first connection element (8) in the direction of the longitudinal axis (3) of the pipetting needle (2).

10. Pipetting device (1) according to one of the preceding claims, wherein a second sensor (14), preferably a microswitch and/or Hall sensor, is provided which detects a movement of the pipetting needle (2) in the direction of the longitudinal axis (3) of the pipetting needle.

11. Pipetting device (1) according to one of Claims 3 to 10, wherein the first securing element (10) has at least one grip (15, 15'), preferably at least two grips (15, 15'), for replacing the pipetting needle (2).

12. Pipetting device (1) according to one of the preceding claims, wherein the pipetting needle (2) is heatable.

13. Automatic analysis appliance comprising a pipetting device (1) according to one of the preceding claims.

14. Use of a pipetting device (1) according to one of Claims 1 to 12 in an automatic analysis appliance.

## Revendications

1. Dispositif (1) de pipetage pour un appareil d'analyse automatique, le dispositif (1) de pipetage comprenant
a. une aiguille (2) de pipetage ayant un axe (3) longitudinal pour le pipetage de liquides,
b. un dispositif (4), mobile dans la direction de l'axe (3) longitudinal de l'aiguille (2) de pipetage et dans au moins une direction perpendiculaire à la direction de l'axe (3) longitudinal de l'aiguille (2) de pipetage, pour le déplacement de l'aiguille (2) de pipetage dans au moins une plage de déplacement,
c. une fixation (5) de l'aiguille (2) de pipetage, qui est montée sur le dispositif (4) mobile et qui est reliée de manière amovible à l'aiguille (2) de pipetage, et
d. un oscillateur, qui peut mettre au moins la pointe (7) de l'aiguille (2) de pipetage en oscillation,
**caractérisé en ce que**
l'oscillateur est monté sur le dispositif (4) mobile ou sur la fixation (5), dans lequel le dispositif (1) de pipetage comprend un premier élément (8) de liaison coulissant ayant un premier élément (9) de rappel, et dans lequel le premier élément (8) de liaison donne une liaison amovible entre l'aiguille (2) de pipetage et l'oscillateur, dans lequel le premier élément de liaison peut coulisser par rapport à l'aiguille de pipetage dans la direction de l'axe longitudinal de l'aiguille de pipetage.

2. Dispositif (1) de pipetage suivant la revendication 1, dans lequel le premier élément (8) de liaison a la forme d'une équerre.

3. Dispositif (1) de pipetage suivant l'une des revendications précédentes, dans lequel le dispositif (1) de pipetage comprend un premier et un deuxième éléments (10, 11) de fixation, et dans lequel l'aiguille (2) de pipetage comprend une suspension (23), et dans lequel le premier élément (10) de fixation est monté latéralement sur la suspension (23) et est constitué en tranchant, et dans lequel le deuxième élément (11) de fixation est monté sur la fixation (5) et est constitué en palier à prisme.

4. Dispositif (1) de pipetage suivant la revendication 3, dans lequel le dispositif (1) de pipetage comprend un deuxième élément (12) de rappel, de préférence un élément de ressort, d'une manière particulièrement préférée un ressort à lame, et dans lequel le deuxième élément (12) de rappel immobilise le tranchant et le palier à prisme en une position fixe et les relie de manière amovible.

5. Dispositif (1) de pipetage suivant l'une des revendications 1 ou 2, dans lequel l'oscillateur comprend un arbre (16) tournant de manière excentrée, qui peut pénétrer dans le premier élément (8) de liaison.

6. Dispositif (1) de pipetage suivant la revendication 5, dans lequel il est prévu un premier capteur (13), de préférence un capteur de Hall, qui détecte la position de l'arbre (16) tournant de manière excentrée.

7. Dispositif (1) de pipetage suivant l'une des revendications précédentes, dans lequel l'oscillateur comprend au moins un moteur (6), de préférence un moteur électrique.

8. Dispositif (1) de pipetage suivant l'une des revendications 1 à 7, dans lequel le premier élément (9) de rappel comprend au moins un élément de ressort, de préférence un ressort spiral.

9. Dispositif (1) de pipetage suivant l'une des revendications 1, 2, 5 ou 6, dans lequel l'aiguille (2) de pipetage peut, avec le premier élément (8) de liaison, coulisser dans la direction de l'axe (3) longitudinal de l'aiguille (2) de pipetage.

10. Dispositif (1) de pipetage suivant l'une des revendications précédentes, dans lequel il est prévu un deuxième capteur (14), de préférence un micro-interrupteur et/ou un capteur de Hall, qui détecte un coulissement de l'aiguille (2) de pipetage dans la direction de l'axe (3) longitudinal de l'aiguille de pipetage.

11. Dispositif (1) de pipetage suivant l'une des revendications 3 à 10, dans lequel le premier élément (10) de fixation a au moins une prise (15, 15'), de préférence au moins deux prises (15, 15'), pour le remplacement de l'aiguille (2) de pipetage.

12. Dispositif (1) de pipetage suivant l'une des revendications précédentes, dans lequel l'aiguille (2) de pipetage peut être chauffée.

13. Appareil d'analyse automatique comprenant un dispositif (1) de pipetage suivant l'une des revendications précédentes.

14. Utilisation d'un dispositif (1) de pipetage suivant l'une des revendications 1 à 12 dans un appareil d'analyse automatique.
